# EUROPÄISCHE PATENTSCHRIFT

(11) **EP 2 162 408 B1**
(45) Veröffentlichungstag und Bekanntmachung des Hinweises auf die Patenterteilung: **12.10.2011**
(21) Anmeldenummer: 08760813.9
(22) Anmeldetag: 11.06.2008
(51) Int. Cl.: C04B 24/42, C04B 26/06, C04B 26/18

(54) **HERSTELLUNG VON KOMPOSITWERKSTOFF AUS ANORGANISCHEM MATERIAL UND ORGANISCHEM POLYMER**
PRODUCTION OF A COMPOSITE COMPRISING INORGANIC MATERIAL AND ORGANIC POLYMER
FABRICATION D'UN MATÉRIAU COMPOSITE À PARTIR D'UN MATÉRIAU INORGANIQUE ET D'UN POLYMÈRE ORGANIQUE

(30) Priorität: 04.07.2007 DE 102007030959
(43) Veröffentlichungstag der Anmeldung: 17.03.2010
(73) Patentinhaber: Wacker Chemie AG, 81737 München (DE)
(72) Erfinder: PFEIFFER, Jürgen, 84561 Mehring (DE); BAUER, Andreas, 84375 Kirchdorf (DE)
(74) Vertreter: Fritz, Helmut
(86) Internationale Anmeldenummer: PCT/EP2008/057255
(87) Internationale Veröffentlichungsnummer: WO 2009/003804

(56) Entgegenhaltungen:
- EP-A- 0 483 280
- WO-A-2006/100321
- JP-A- 8 073 769
- JP-A- 9 241 424
- JP-A- 2004 099 351
- US-A- 5 719 220
- SATO Y. ET AL: "Polyester polymer concrete" CHEMICAL ABSTRACTS, AMERICAN CHEMICAL SOCIETY, US, Bd. 78, Nr. 26, 2. Juli 1973 (1973-07-02), Seite 244, XP000392403 ISSN: 0009-2258

## Beschreibung

Die Erfindung betrifft ein Verfahren zur Herstellung von Kompositwerkstoffen aus anorganischem Material, organischem Polymer und Silanhaftvermittler.

Siliziumorganische Verbindungen mit ungesättigten organischen funktionellen Gruppen, wie z.B. Vinyl-, Acryl- oder Methacrylgruppen finden weitverbreitete Anwendung als Haftvermittler zwischen anorganischen und organischen Materialen, so z.B. in Schlichten für Glasfasern, als Quervernetzer in organischen Polymeren, oder auch zur Behandlung von Füllstoffen.

Eine wichtige Anwendung derartiger Silane ist darüber hinaus die durch den haftvermittelnden Effekt erreichbare Verbesserung der mechanischen Eigenschaften von künstlichen Steinen, die aus anorganischen Füllstoffen und härtbaren, organischen Harzen hergestellt werden können.

Dabei können die ungesättigte Gruppen tragenden Silane sowohl nach EP 483280 B1 zur Vorbehandlung entsprechender Füllstoffe als auch zur "in-situ" Behandlung direkt bei der Formulierung des Endproduktes zugefügt werden, wie in der JP 3209084 B beschrieben.

Bei der Herstellung von künstlichen Steinprodukten auf Basis organischer Harze und anorganischer Füllstoffe unterscheidet man im Wesentlichen zwei Produkte, nämlich sogenannte "solid surface"-Produkte, die im Allgemeinen aus ATH (Aluminiumtrihydrat)-gefülltem Polymethylmethacrylat (PMMA) bestehen, und den sogenannten "quartz-surface"-Produkten, die zumeist auf SiO₂-gefüllten ungesättigten Polyesterharzen (UP-Harze) beruhen. Von besonderer Bedeutung sind dabei Verfahren, bei denen das Silan "in-situ" eingesetzt wird und bei denen die Mischung bestehend aus den anorganischen, zumeist silikatischen Füllstoffen, dem UP-Harz und ggf. zusätzlichen Additiven vor der Aushärtung unter Vakuum und Vibration verdichtet wird, wie dies im in der US 4698010 beschriebenen, sogenannten "Breton-Prozess" durchgeführt wird.

Ein Nachteil der bislang typischerweise eingesetzten Silanhaftvermittler ist der relativ hohe Preis, der trotz der geringen eingesetzten Menge (im Allgemeinen ca. 0,05-1,0 Gew.% auf die gesamte Rohstoffmischung) einen nicht unerheblichen Teil der Gesamtrohstoffkosten ausmacht. Darüber hinaus wäre eine Verringerung der Verschmutzungsneigung sowie eine Verbesserung der Heisswasser- und Bewitterungsbeständigkeit der nach dem derzeitigen Stand der Technik hergestellten Kunststeinprodukte wünschenswert.

In JP 2004099351 ist die Verwendung eines Silanhaftvermittlers zusammen mit einem weiteren Alkoxysilan bzw. deren (Co)-Hydrolysate zur Oberflächenvorbehandlung von Füllstoffen für den Einsatz in künstlichem Marmor beschrieben.

In JP 3072697 B ist die Verwendung von Methyl- oder Ethylsilikat und deren Polymeren in der Mischung mit einem ungesättigte Gruppen aufweisenden Silanhaftvermittler beschrieben. Wiederum wird die Verwendung eines solchen Gemisches zur Vorbehandlung anorganischer Füllstoffe, in diesem Fall ATH, beschrieben.

In US 5719220 A ist eine gefüllte Harzzusammensetzung zur Herstellung von Kunststein beschrieben, beinhaltend 20 bis 80 % anorganischen Füllstoff, Harzbinder sowie alkoxylierte Polysiloxane sowie einen ungesättigten Haftvermittler, wie beispielsweise γ-Methacryloxypropyltrimethoxysilan oder Vinyltriethoxysilan.

JP 3209084 B beschreibt die Verwendung von Mischungen bestehend aus einem thermisch härtbaren organischen Harz und anorganischen Pulvern oder Fasern, die mit einem Gemisch aus ungesättigten Gruppen aufweisenden Alkoxysilanen und Siloxanen behandelt werden, um die Wasserbeständigkeit zu erhöhen. Die Zugabe dieser Komponenten kann dabei sowohl zum Füllstoff als auch zur Mischung des Füllstoffs mit dem Harz erfolgen.

Verfahren zur Herstellung von Kompositwerkstoff, nämlich Kunststeinprodukten,
bei dem das anorganische Pulver vermischt wird mit organischem Polymer und gleichzeitig oder anschließend vermischt wird mit
(A) Silanhaftvermittler der allgemeinen Formel (1)

   H₂C=C(R¹)[C(O)O]_{w}(O)ₓ-(R²)_{y}-Si(R³)_{z}-(OR⁴)_{3-z} (1),

   wobei
   - **R¹**: ein Wasserstoffatom oder einen linearen oder verzweigten Kohlenwasserstoffrest mit 1-10 Kohlenstoffatomen,
   - **R²**: einen zweiwertigen linearen, zyklischen oder verzweigten Kohlenwasserstoffrest mit 1-40 Kohlenstoffatomen, der ein oder mehrere Heteroatome, ausgewählt aus den Elementen Stickstoff, Sauerstoff, Schwefel oder Phosphor enthalten kann,
   - **R³ und R⁴**: lineare, zyklische oder verzweigte Kohlenwasserstoffreste mit 1-10 Kohlenstoffatomen,
   - **w**: die Werte 0 oder 1,
   - **x**: die Werte 0 oder 1,
   - **y**: die Werte 0 oder 1 und
   - **z**: die Werte 0, 1 oder 2 bedeuten, mit der Maßgabe, daß **w** und **x** nicht beide gleichzeitig 1 sein dürfen,
   und Organosiliciumverbindungen, die ausgewählt werden aus
(B) Siloxan, das aufgebaut ist aus
   0,0 bis 80,0 Mol-% Einheiten der allgemeinen Formel (2)

   [R⁵₃SiO_{1/2}] (2),

   0 bis 5,0 Mol-% Einheiten der allgemeinen Formel (3)

   [R⁵₂SiO_{2/2}] (3),

   0 bis 99,5 Mol-% Einheiten der allgemeinen Formel (4)

   [R⁵SiO_{3/2}] (4)

   und
   0 bis 90,0 Mol-% Einheiten der allgemeinen Formel (5)

   [SiO_{4/2}] (5),

   wobei
   - **R⁵**: Wasserstoffatom, Hydroxylgruppe, SiC-gebundener, gegebenenfalls substituierter C₁- bis C₁₈- Kohlenwasserstoffrest, welcher durch zweibindige, beidseitig an Kohlenstoffatome gebundene Reste -O-, -COO-, -OOC-, -CONR⁶-, -NR⁶CO- und -CO- unterbrochen sein kann oder C₁- bis C₁₈-Kohlenwasserstoffoxirest,
   - **R⁶**: Wasserstoffatom oder C₁- bis C₁₈-Kohlenwasserstoffrest, mit der Maßgabe, daß die Organopolysiloxane (B) mindestens 2 Einheiten der allgemeinen Formeln (2) bis (5) aufweisen und die Summe der Einheiten der allgemeinen Formeln (2) bis (5) 100 Mol-% ergibt,
(C) Organosiliciumverbindung, die aufgebaut ist aus
   0,0 bis 100,0 Mol-% Einheiten der allgemeinen Formel (6)

   [R⁷₃SiO_{1/2}] (6),

   0,0 bis 98,0 Mol-% Einheiten der allgemeinen Formel (7)

   [R⁷₂SiO_{2/2}] (7),

   0,0 bis 98,0 Mol-% Einheiten der allgemeinen Formel (8)

   [R⁷SiO_{3/2}] (8)

   und
   0,0 bis 98,0 Mol-% Einheiten der allgemeinen Formel (9)

   [SiO_{4/2}] (9),

   wobei
   - **R⁷**: Hydroxylgruppe, zweiwertiger SiC-gebundener, gegebenenfalls substituierter C₁- bis C₁₈-Kohlenwasserstoffrest, welcher durch zweibindige, beidseitig an Kohlenstoffatome gebundene Reste aus der Gruppe -O-, -COO-, -OOC-, -CONR⁶-, -NR⁶CO-und -CO- unterbrochen sein kann oder C₁- bis C₁₈- Kohlenwasserstoffoxirest,
   mit der Maßgabe, daß in den Organosiliciumverbindungen (C) mindestens 90 Mol-% der Reste **R⁷** C₁- bis C₁₈- Kohlenwasserstoffoxireste sind und die die Summe der Einheiten der allgemeinen.Formeln (1) bis (4) 100 Mol-% .. ergibt,
   und
(D) Organosilan der allgemeinen Formel (10)

   Si(R⁸)₄ (10),

   wobei
   - **R⁸**: C₁- bis C₁₈-Kohlenwasserstoffoxireste bedeutet,
   dadurch gekennzeichnet, dass die Kunststeinprodukte mindestens 90 Gew-% anorganisches Pulver mit einer Korngrößenverteilung
   10 - 40 Gew.-% Partikel einer Größe < 0,1 mm,
   10 - 40 Gew.-% Partikel einer Größe von 0,1-0,6 mm,
   1 - 80 Gew.-% Partikel einer Größe von 0,61-1,2 mm und
   10 - 50 Gew.-% Partikel einer Größe von 1,21-15 mm
   enthalten.

Bei der Herstellung der Kompositwerkstoffe weist der Einsatz der Kombination von ungesättigten Gruppen tragenden Silanhaftvermittlern (A) und der Organosiliciumverbindungen (B), (C), (D) deutliche Vorteile auf.
Die notwendige Menge an ungesättigten Gruppen tragenden Silanhaftvermittlern (A) zur Verbesserung der mechanischen Eigenschaften von Kunststeinprodukten wird verringert, was einen deutlichen Kostenvorteil mit sich bringt.
Der Erhalt der mechanische Festigkeit verbessernden Wirkung des reinen Silanhaftvermittlers (A) bei Ersatz durch die Kombination von ungesättigten Gruppen tragenden Silanhaftvermittlern (A) und der Organosiliciumverbindungen (B), (C), (D) war nicht zu erwarten.
Dadurch trägt der Einsatz der Kombinationen der Komponenten (A), (B) (C) und (D) bei geschickter Auswahl durch den Fachmann zudem zur Reduktion der Rohstoffkosten bei.

Auch lässt sich die Menge der freigesetzten verdampfbaren organischen Verbindungen deutlich verringern, was im Sinne einer reduzierten Freisetzung von umweltgefährdenden Stoffen einen großen Fortschritt darstellt. Des Weiteren wird die Verschmutzungsneigung der Kompositwerkstoffe gegenüber verschiedenen, typischerweise im Umfeld der Kunststeinprodukte auftretenden Medien reduziert.

Beispiele für unsubstituierte Reste **R¹, R³, R⁴, R⁵, R⁶** und **R⁷** sind Alkylreste, wie der Methyl-, Ethylrest; Cycloalkylreste, wie Cyclohexylrest; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Bei den Kohlenwasserstoffresten der Reste **R¹, R³, R⁴, R⁵, R⁶** und **R⁷** handelt es sich bevorzugt um unsubstituierte und substituierte C₁- bis C₆-Alkylreste, Phenylrest, insbesondere um den Methyl-, Ethyl-, Propyl- und Phenylrest.

Die Kohlenwasserstoffoxireste **R⁷** und **R⁸** sind vorzugsweise C₁-bis C₆-Alkoxireste insbesondere Methoxi- und Ethoxireste.

Beispiele für substituierte Kohlenwasserstoffreste als Rest **R⁵** sind mit Fluor, Chlor oder Brom halogenierte Kohlenwasserstoffreste, Mercaptoalkylreste; Ureidoalkylreste; Epoxialkylreste; (Meth)acryloxyalkylreste, Cyanoalkylreste; Aminoalkylreste; Aminoarylreste; quarternäre Ammoniumreste; Hydroxyalkylreste; Phosphonsäurereste; Phosphonatreste und Sulfonatreste.

Beispiele für Silanhaftvermittler der allgemeinen Formel (1) sind Acrylsilane, wie z.B. Acryloxymethyltrimethoxysilan, Acryloxymethyltriethoxysilan, Acryloxymethyltriisopropoxysilan, Acryloxymethyl(methyl)dimethoxysilan, Acryloxymethyl(methyl)diethoxysilan, Acryloxymethyl(dimethyl)methoxysilan, Acryloxymethyl(dimethyl)ethoxysilan, 3-Acryloxypropyltrimethoxysilan, 3-Acryloxypropyltriethoxysilan, 3-Acryloxypropyl(methyl)dimethoxysilan, 3-Acryloxypropyl(methyl)diethoxysilan, 3-Acryloxypropyl(dimethyl)methoxysilan, 3-Acryloxypropyl(dimethyl)ethoxysilan, oder auch Methacrylsilane wie z.B. Methacryloxymethyltrimethoxysilan, Methacryloxymethyltriethoxysilan, Methacryloxymethyltriisopropoxysilan, Methacryloxymethyl(methyl)dimethoxysilan, Methacryloxymethyl(methyl)diethoxysilan, Methacryloxymethyl(dimethyl)methoxysilan, Methacryloxymethyl(dimethyl)ethoxysilan, 3-Methacryloxypropyltrimethoxysilan, 3-Methacryloxypropyltriethoxysilan, 3-Methacryloxypropyltriisopropoxysilan, 3-Methacryloxypropyl(methyl)dimethoxysilan, 3-Methacryloxypropyl(methyl)diethoxysilan, 3-Methacryloxypropyl(methyl)diisopropoxysilan, 3-Methacryloxypropyl(dimethyl)methoxysilan, 3-Methacryloxypropyl(dimethyl)ethoxysilan, 3-Methacryloxypropyl(dimethyl)isopropoxysilan, oder auch Vinylsilane wie z.B. Vinyltrimethoxysilan, Vinyl(methyl)dimethoxysilan, Vinyl(dimethyl)methoxysilan, Vinyltriethoxysilan, Vinyl(methyl)diethoxysilan, Vinyl(dimethyl)ethoxysilan, Vinyltris(2-methoxyethoxy)silan, Vinyl(methyl)bis(2-methoxyethoxy)silan, Vinyl(dimethyl)2-methoxyethoxysilan, Vinyltriisopropoxysilan, Vinyl(methyl)diisopropoxysilan, Vinyl(dimethyl)isopropoxysilan. Bevorzugte Silane (A) der allgemeinen Formel (I) sind Acryloxymethyltrimethoxysilan, Acryloxymethyltriethoxysilan, 3-Acryloxypropyltrimethoxysilan, Methacryloxymethyltrimethoxysilan, Methacryloxymethyltriethoxysilan, Methacryloxymethyl(methyl)dimethoxysilan, Methacryloxymethyl(methyl)diethoxysilan, 3-Methacryloxypropyltrimethoxysilan, 3-Methacryloxypropyltriethoxysilan, 3-Methacryloxypropyltriisopropoxysilan, Vinyltrimethoxysilan, Vinyl(methyl)dimethoxysilan, Vinyltriethoxysilan, Vinyltris(2-methoxyethoxy)silan, Vinyltriisopropoxysilan,
besonders bevorzugt sind Acryloxymethyltrimethoxysilan, Methacryloxymethyltrimethoxysilan, 3-Methacryloxypropyltrimethoxysilan, Vinyltrimethoxysilan und Vinyltriethoxysilan.

Neben der Komponente (A) können nur eine oder mehrere Komponenten von (B), (C), und (D) eingesetzt werden.

Vorzugsweise enthalten die Organopolysiloxane (B) 10 bis 60,0 Mol-% Einheiten der allgemeinen Formel (2), 0 bis 1,0 Mol.-% Einheiten der allgemeinen Formel (3), 0 bis 10,0 Mol.-% Einheiten der allgemeinen Formel (4) und 0 bis 80,0 Mol-% Einheiten der allgemeinen Formel (5).

In einer anderen bevorzugten Ausführungsform enthalten die Organopolysiloxane (B)
0 bis 60,0 Mol-% Einheiten der allgemeinen Formel (2),
0 bis 1,0 Mol.-% Einheiten der allgemeinen Formel (3),
0 bis 90,0 Mol.-% Einheiten der allgemeinen Formel (4) und
0 bis 10,0 Mol-% Einheiten der allgemeinen Formel (5).

Vorzugsweise weisen die Organopolysiloxane (B) mindestens 5, insbesondere mindestens 10, vorzugsweise höchstens 1000 und insbesondere höchstens 100 Einheiten der allgemeinen Formeln (2) bis (5) auf.

Vorzugsweise enthalten die Organosiliciumverbindungen (C)
10 bis 100,0 Mol-% Einheiten der allgemeinen Formel (6),
0 bis 70 Mol.-% Einheiten der allgemeinen Formel (7),
0 bis 40,0 Mol.-% Einheiten der allgemeinen Formel (8) und
0 bis 40,0 Mol-% Einheiten der allgemeinen Formel (9).

Vorzugsweise sind mindestens 95 Mol-%, insbesondere mindestens 99 Mol-% der Reste **R⁷** C₁- bis C₁₈-Kohlenwasserstoffoxireste.

Das Verhältnis der Komponenten (A), (B), (C) und (D) wird vorzugsweise so gewählt, dass 20 - 90 Gew-% der Komponente (A), 0-80 Gew-% (B), 0-80 Gew-% (C) und 0-80 Gew-% (D), enthalten sind, wobei die Summe der Komponenten (B), (C) und (D) mindestens 10 Gew-% und die Summe der Komponenten (A), (B), (C) und (D) 100 Gew-% beträgt.
Bevorzugt wird das Verhältnis der Komponenten (A), (B), (C) und (D) so gewählt, dass die Mischung 40 - 70 Gew-% der Komponente (A), 0-60 Gew-% (B), 0-60 Gew-% (C) und 0-60 Gew-% (D), enthalten sind, wobei die Summe der Komponenten (B), (C) und (D) mindestens 30 Gew-% beträgt.
Besonders bevorzugt wird das Verhältnis der Komponenten (A), (B), (C) und (D) so gewählt, dass die Mischung 45 - 60 Gew-% der Komponente (A), 0-55 Gew-% (B), 0-55 Gew-% (C) und 0-55 Gew-% (D), enthalten sind, wobei die Summe der Komponenten (B), (C) und (D) mindestens 40 Gew-% beträgt.

Die vier Komponenten (A), (B), (C) und (D) können entweder vorgemischt und so zu den restlichen Komponenten des Kompositwerkstoffs gegeben werden oder sie können auch nacheinander in beliebiger Reihenfolge getrennt zu den weiteren Komponenten des Kompositwerkstoffs gegeben werden. Die vier Komponenten (A), (B), (C) und (D) können zur Mischung bestehend aus anorganischem Material, organischem Polymer und gegebenenfalls weiteren Additiven gegeben werden oder in einem vorgelagerten Mischungsschritt mit dem organischen Polymer vermischt werden, welches dann erst mit dem anorganischen Material vermischt wird.
Bevorzugt erfolgt die Anwendung der Komponenten (A), (B), (C) und (D) als Mischung in einem vorgelagerten Mischungsschritt mit dem organischen Polymer und gegebenenfalls weiteren Komponenten, welches erst danach mit dem anorganischen Material vermischt wird.

Ganz besonders bevorzugt erfolgt die Anwendung der Komponenten (A), (B), (C) und (D) als Mischung, indem diese Mischung zunächst mit dem organischen Polymer und gegebenenfalls weiteren Komponenten homogen vermischt wird und in einem nachfolgenden Schritt mit dem anorganischen Material vermischt wird.

Vorzugsweise werden Kunststeinprodukte hergestellt, die höchstens 98 Gew-%, insbesondere höchstens 95 Gew-% anorganisches Material enthalten.

Als anorganisches Material werden bevorzugt amorphes oder kristallines Siliciumdioxid, Sand, Feldspat, Granit oder andere silikatische Feststoffe eingesetzt.

Als organische Polymere werden bevorzugt eingesetzt ungesättigte Polyesterharze oder Acrylatharze, wie z.B. in WO 2006/100321 A1 beschrieben, auf die ausdrücklich Bezug genommen wird.
Bevorzugte Acrylatharze sind Ester der Polyacrylsäure oder der Polymethacrylsäure. Besonders bevorzugt sind die Methyl-, Ethyl-, n-Butyl- 2-Ethylhexyl-, iso- und tert-Butyl-, sowie Laurylester. Besonders bevorzugt sind Polymethylmethacrylat und (PMMA) Polymethylacrylat.

Ungesättigte Polyesterharze (UP-Harze) sind Reaktionsharze auf Basis von ungesättigten Polyestern, die unter Polymerisation und Vernetzung zu duroplastischen Massen aushärten.
Vorzugsweise werden als ungesättigte Polyesterharze Kondensationsprodukte aus gesättigten und ungesättigten Dicarbonsäuren oder Säureanhydriden, wie z.B. Maleinsäure, Fumarsäure, Maleinsäureanhydrid, Crotonsäure, Phthalsäure, Isophthalsäure, Terephthalsäure, Adipinsäure, Bernsteinsäure, Tetrahydrophthalsäureanhydrid und Di- oder Oligoolen, wie z.B Ethylenglykol, 1,2-Propylenglykol, 1,3-Propylenglykol, Diethylenglykol, Dipropylenglykol, 1,3- oder 1,4-Butandiol, Pentylglykol, Neopentylglykol, Glycerin, Reaktionsprodukte aus Bisphenol A oder hydriertem Bisphenol A mit Ethylenoxid oder Propylenoxid, Trimethylolpropan oder auch Pentaerithritol eingesetzt. Die ungesättigten Polyesterharze enthalten vorzugsweise als zusätzliche Komponenten copolymerisierbare Monomere, wie z.B. Styrol, α-Methylstyrol, γ-Methylstyrol Vinyltoluol, Methylmethacrylat, Acrylsäure, Ethylmethacrylate. Die ungesättigten Polyesterharze enthalten gegebenenfalls auch bifunktionelle Monomere, wie Divinylbenzol oder Diallylphthalat.

Vorzugsweise werden bei der Herstellung der Kompositwerkstoffe zur Härtung des organischen Polymers Radikalinitiatoren zugesetzt, wie Peroxobenzoesäure-tert.-butylester oder 2-Ethylperoxohexansäure-tert.-butylester.

Vorzugsweise werden bei der Herstellung der Kompositwerkstoffe als Beschleuniger für die Radikalreaktion Metallsalze, insbesondere Cobaltkomplexverbindung, wie Cobalt-(II)-dioctoat zugesetzt.

Optional kann zusätzlich zu den Komponenten (A), (B), (C) und (D) ein monomeres Alkyltrialkoxysilan zugegeben werden.
Typische Beispiele solcher Alkyltrialkoxysilane sind Methyltrimethoxysilan, Methyltriethoxysilan, Methyltriisopropoxysilan, Ethyltrimethoxysilan, Ethyltriethoxysilan, Ethyltriisopropoxysilan, Phenyltrimethoxysilan, Phenyltriethoxysilan oder auch Phenyltriisopropoxysilan.

Gegebenenfalls können dem Kompositwerkstoff weitere Komponenten, wie anorganische Pigmente oder farbige Glaspartikel zugegeben werden, um den jeweiligen Design-Vorgaben entgegen zu kommen. Des Weiteren können auch UV-Absorber und Antioxidantien zugegeben werden, um die Bewitterungsstabilität der aus dem Kompositwerkstoff hergestellten Kunststeinprodukte zu verbessern.

Bei der Herstellung der Kompositwerkstoffe werden bevorzugt eingesetzt:
1-20 Gew-%, insbesondere 3-10 Gew-% organisches Polymer,
0,005-1 Gew-%, insbesondere 0,01-0,5 Gew-% Radikalinitiator,
0,0005-0,01 Gew-%, insbesondere 0,01-0,03 Gew-% Metallsalz,
0,005-1 Gew-%, insbesondere 0,01-0,5 Gew-% Komponenten (A), (B), (C) und (D) zusammen.

Der Kompositwerkstoff wird vorzugsweise bei erhöhter Temperatur, vorzugsweise bei 70 bis 150°C, insbesondere bei 90 bis 120°C ausgehärtet.

Ganz besonders bevorzugt ist die Ausführung des erfindungsgemässen Verfahrens als "Breton-Prozess", bei dem die zur Herstellung der Kunststeinprodukte verwendeten Rohstoffe nach ihrer Vermischung unter Vakuum, Druck und Vibration verdichtet werden, bevor unter erhöhter Temperatur die Aushärtung erfolgt.

Typischerweise enthält die Rohstoffzusammensetzung zur erfindungsgemässen Herstellung von Kunststeinprodukten nach dem ganz besonders bevorzugten "Breton-Prozess":
ο 90-95 Gew-% anorganisches Material,
ο 4-9 Gew-% organisches Polymer,
ο 0,01-0,5 Gew-% Radikalinitiator,
ο 0,001-0,03 Gew-% Metallsalz,
ο 0,01-0,5 Gew-% als Summe der Komponenten (A), (B), (C) und (D).

Alle vorstehenden Symbole der vorstehenden Formeln weisen ihre Bedeutungen jeweils unabhängig voneinander auf. In allen Formeln ist das Siliziumatom vierwertig.

Im Folgenden werden einige Beispiele angeführt, die die Vorteile des erfindungsgemässen Verfahrens zur Verbesserung der mechanischen Eigenschaften und der Verschmutzungsstabilität von Kunststeinprodukten demonstrieren.
In den Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

Die Vergleichsbeispiel 1 und 2 und die Beispiele 1 bis 9 sind nicht erfindungsgemäss und dienen zur Illustration.

### Vergleichsbeispiel 1 (V1):

87 g eines ungesättigte Polyesterharzes (Palatal® P4 der DSM) werden unter Rühren mit 1,7 g tert-Butylperoxy-2-ethylhexanoat (TBPEH) und 0,17 g Cobalt(II)octoat vermischt. Zu dieser Mischung werden 260 g Füller (bestehend aus 80 Gew% Quarzmehl der Körnung < 20 µm und 20 Gew% Quarzmehl der Körnung 20-45 µm), 236 g Quarzsand der Körnung 0,1-0,3 mm, 164 g Quarzsand der Körnung 0,4-0,7 mm und 253 g Quarzsand der Körnung 0,7-1,2 mm gegeben und das so erhaltene Gemisch mit Hilfe eines Planeten-Mischers vom Typ LPV-1 der Fa. PC Laborsysteme für 10 Minuten innig vermischt.
Diese Mischung wird in eine Stahlform der Größe 15 x 15 x 2 cm eingefüllt und mittels einer Presse unter einem Druck von ca 6 kg/cm² für 15 Minuten komprimiert. Der so erhaltene Rohling wird bei 100°C für 30 Minuten ausgehärtet. Nach 48 Stunden Lagerung bei Raumtemperatur werden Prüfkörper für der Bestimmungen der mechanischen Eigenschaften ausgeschnitten, bzw. Untersuchungen zur Verschmutzungsneigung durchgeführt.

### Vergleichsbeispiel 2 (V2):

Das Vorgehen von Vergleichsbeispiel 1 wird wiederholt mit dem Unterschied, dass vor Zugabe des TBPEH 1 g 3-Methacryloyloxypropyltrimethoxysilan (GENIOSIL® GF 31 der Wacker Chemie AG) zum ungesättigten Polyesterharz Palatal® P4 gegeben werden.

### Beispiel 1 (Bsp. 1):

Das Vorgehen von Vergleichsbeispiel 1 wird wiederholt mit dem Unterschied, dass vor Zugabe des TBPEH 1 g einer Mischung bestehend aus 50 Gew% 3-Methacryloyloxypropyltrimethoxysilan (GENIOSIL® GF 31 der Wacker Chemie AG) und 50 Gew% eines ethoxyfunktionellen Methylpolysiloxans (Viskosität nach DIN 51562-1 = 20 mm²/s, Mw ca. 2500 g/mol, Gehalt Alkoxygruppen ca. 40 Gew%) zum ungesättigten Polyesterharz Palatal® P4 gegeben werden.

### Beispiel 2(Bsp. 2):

Das Vorgehen von Vergleichsbeispiel 1 wird wiederholt mit dem Unterschied, dass vor Zugabe des TBPEH 1 g einer Mischung bestehend aus 50 Gew% 3-Methacryloyloxypropyltrimethoxysilan (GENIOSIL® GF 31 der Wacker Chemie AG) und 25 Gew% eines ethoxyfunktionellen Methylpolysiloxans (Viskosität nach DIN 51562-1 = 20 mm²/s, Mw ca. 2500 g/mol, Gehalt Alkoxygruppen ca. 40 Gew%) und 25 Gew% Tetraethoxysilan zum ungesättigten Polyesterharz Palatal@ P4 gegeben werden.

### Beispiel 3 (Bsp. 3):

Das Vorgehen von Vergleichsbeispiel 1 wird wiederholt mit dem Unterschied, dass vor Zugabe des TBPEH 1 g einer Mischung bestehend aus 40 Gew% Vinyltrimethoxysilan (GENIOSIL® XL 10 der Wacker Chemie AG), 30 Gew% eines methoxyfunktionellen Methylsiliconharzes (Viskosität nach DIN 51562-1 = 27 mm²/s, Mw ca. 2500 g/mol, Gehalt Alkoxygruppen ca. 22 Gew%) und 30 Gew% Tetramethoxysilan zum ungesättigten Polyesterharz Palatal@ P4 gegeben werden.

### Beispiel 4 (Bsp. 4):

Das Vorgehen von Vergleichsbeispiel 1 wird wiederholt mit dem Unterschied, dass vor Zugabe des TBPEH 1 g einer Mischung bestehend aus 49 Gew% 3-Methacryloyloxypropyltrimethoxysilan (GENIOSIL® GF 31 der Wacker Chemie AG), 49 Gew% Tetraethoxysilan und 2% Phenyltriethoxysilan zum ungesättigten Polyesterharz Palatal@ P4 gegeben werden.

### Beispiel 5 (Bsp. 5):

Das Vorgehen von Vergleichsbeispiel 1 wird wiederholt mit dem Unterschied, dass vor Zugabe des TBPEH 1 g einer Mischung bestehend aus 40 Gew% 3-Methacryloyloxypropyltrimethoxysilan (GENIOSIL® GF 31 der Wacker Chemie AG), 30 Gew% eines methoxyfunktionellen Methylsiliconharzes (Viskosität nach DIN 51562-1 = 27 mm²/s, Mw ca. 2500 g/mol, Gehalt Alkoxygruppen ca. 22 Gew%) und 30 Gew% Tetramethoxysilan zum ungesättigten Polyesterharz Palatal® P4 gegeben werden.

### Beispiel 6 (Bsp. 6):

Das Vorgehen von Vergleichsbeispiel 1 wird wiederholt mit dem Unterschied, dass vor Zugabe des TBPEH 1 g einer Mischung bestehend aus 40 Gew% 3-Methacryloyloxypropyltrimethoxysilan (GENIOSIL® GF 31 der Wacker Chemie AG), 30 Gew% eines aus T-Einheiten aufgebauten Phenylpropylpolysiloxans (Erweichungspunkt ca 45 °C, OH-Gehalt nach Zerewitinoff = 3,9 %, Mw ca. 1600 g/mol) und 30 Gew% Tetraethoxysilan zum ungesättigten Polyesterharz Palatal P4 gegeben werden.

### Beispiel 7 (Bsp. 7):

Das Vorgehen von Vergleichsbeispiel 1 wird wiederholt mit dem Unterschied, dass vor Zugabe des TBPEH 1 g einer Mischung bestehend aus 40 Gew% Methacryloyloxymethyltrimethoxysilan (GENIOSIL® XL 33 der Wacker Chemie AG), 30 Gew% eines methoxyfunktionellen Methylsiliconharzes (Viskosität nach DIN 51562-1 = 27 mm²/s, Mw ca. 2500 g/mol, Gehalt Alkoxygruppen ca. 22 Gew%) und 30 Gew% Tetramethoxysilan zum ungesättigten Polyesterharz Palatal® P4 gegeben werden.

### Beispiel 8 (Bsp. 8):

Das Vorgehen von Vergleichsbeispiel 1 wird wiederholt mit dem Unterschied, dass vor Zugabe des TBPEH 1 g einer Mischung bestehend aus 40 Gew% 3-Methacryloyloxypropyltrimethoxysilan (GENIOSIL® GF 31 der Wacker Chemie AG), 30 Gew% eines ethoxyfunktionellen Methylsiliconharzes (Viskosität nach DIN 51562-1 = 20 mm²/s, Mw ca. 2500 g/mol, Gehalt Alkoxygruppen ca. 40 Gew%) und 30 Gew% eines oligomerisierten Tetraethoxysilans (SiO₂-Gehal ca. 41%) zum ungesättigten Polyesterharz Palatal® P4 gegeben werden.

### Beispiel 9 (Bsp. 9):

Das Vorgehen von Vergleichsbeispiel 1 wird wiederholt mit dem Unterschied, dass vor Zugabe des TBPEH 1 g einer Mischung bestehend aus 40 Gew% Vinyltriethoxysilan(GENIOSIL® GF 56 der Wacker Chemie AG), 30 gew% eines ethoxyfunktionellen Methylsiliconharzes (Viskosität nach DIN 51562-1 = 20 mm²/s, Mw ca. 2500 g/mol, Gehalt Alkoxygruppen ca. 40 Gew%) und 30 Gew% eines oligomerisierten Tetraethoxysilans (SiO₂-Gehalt ca, 41%) zum ungesättigten Polyesterharz Palatal® P4 gegeben werden.

An den Prüfkörpern aus den Beispielen 1-9 werden Untersuchungen zur mechanischen Festigkeit nach DIN EN 14617-2 und zur Abriebbeständigkeit nach UNI 10532 durchgeführt. Die Ergebnisse dieser Untersuchungen sind in der nachfolgenden Tabelle 1 zusammengefasst.

Daneben wurden Platten der in den Beispielen 1-9 hergestellten Kunststeinprodukte mit Tropfen verschiedener flüssiger Testsubstanzen benetzt. Die so behandelten Platten wurden bei 25 °C und 50 % rel. Feuchte 48 Stunden gelagert. Danach wurden die Testsubstanzen mit Spülmittel enthaltenden vollentsalztem Wasser abgewaschen, die Oberfläche mit einem flusenfreien Tuch getrocknet und die Schädigung der Oberfläche visuell beurteilt (Skala 1-5, 1 = Keine Schädigung, 5 = Oberfläche fühlbar aufgeraut/angeätzt). Die Ergebnisse dieser Beurteilungen sind in Tabelle 2 zusammengefasst.

**Tabelle 1: Ergebnisse der mechanischen Prüfungen zur Biegefestigkeit und Abriebbeständigkeit an Prüfkörpern der entsprechend der Beispiele 1-9 und Vergleichbeispiele 1-2 hergestellten Kunststeinprodukte.**

| | Bsp. 1 | Bsp. 2 | Bsp. 3 | Bsp. 4 | Bsp. 5 | Bsp. 6 | Bsp. 7 | Bsp. 8 | Bsp. 9 | V 1 | V 2 |
|---|---|---|---|---|---|---|---|---|---|---|---|
| Biegefestigkeit [MPa] | 55,3 | 59,3 | 48,9 | 60,5 | 57,2 | 61,5 | 60,2 | 60,1 | 45,3 | 35,2 | 61,1 |
| Abriebfestigkeit [MM³] | 167 | 163 | 180 | 165 | 165 | 163 | 160 | 165 | 160 | 195 | 165 |

Aus den Ergebnissen ist deutlich zu erkennen, dass die Mischungen der Beispiele 1 bis 9 die mechanischen Eigenschaften im Vergleich zu einem Produkt ohne Haftvermittler deutlich verbessern, wobei die Verbesserungen der Mischungen, die ein Vinylsilan enthalten, deutlich geringer ausfallen.

**Tabelle 2: Ergebnisse der Prüfungen zur chemischen Beständigkeit an Prüfkörpern der entsprechend der Beispiele 1-9 und Vergleichbeispiele 1-2 hergestellten Kunststeinprodukte.**

| | Bsp. 1 | Bsp. 2 | Bsp. 3 | Bsp. 4 | Bsp. 5 | Bsp. 6 | Bsp. 7 | Bsp. 8 | Bsp. 9 | V 1 | V 2 |
|---|---|---|---|---|---|---|---|---|---|---|---|
| Wasser | 1 | 1 | 2 | 1 | 1 | 1 | 1 | 1 | 1 | 2 | 1 |
| SB-Öl¹⁾ | 2 | 2 | 3 | 2 | 2 | 3 | 3 | 2 | 3 | 4 | 4 |
| Kaffee | 2 | 3 | 3 | 2 | 3 | 2 | 3 | 2 | 3 | 3 | 3 |
| Essig | 4 | 4 | 5 | 4 | 4 | 4 | 4 | 4 | 5 | 5 | 5 |
| Ketchup | 5 | 5 | 5 | 4 | 4 | 5 | 5 | 4 | 4 | 5 | 5 |
| Senf | 4 | 5 | 4 | 5 | 5 | 4 | 4 | 4 | 5 | 5 | 5 |
| Rotwein | 3 | 3 | 3 | 2 | 2 | 3 | 3 | 2 | 3 | 4 | 4 |
| SSO²⁾ | 3 | 3 | 3 | 2 | 2 | 2 | 3 | 3 | 3 | 3 | 4 |
| WMB³⁾ | 2 | 2 | 2 | 2 | 2 | 1 | 1 | 1 | 2 | 2 | 2 |

| | | | | | | | | | | | |
|---|---|---|---|---|---|---|---|---|---|---|---|
| ¹⁾Sonnenblumenöl; ²⁾Soja-Sudan-Orange; ³⁾wässrige Methylenblaulösung | | | | | | | | | | | |

## Patentansprüche

1. Verfahren zur Herstellung von Kompositwerkstoff, nämlich Kunststeinprodukten,
bei dem das anorganische Pulver vermischt wird mit organischem Polymer und gleichzeitig oder anschließend vermischt wird mit
(A) Silanhaftvermittler der allgemeinen Formel (1)
H₂C=C(R¹)[C(O)O]_{w}(O)ₓ-(R²)_{y}-Si(R³)_{z}-(OR⁴)_{3-z} (1),
wobei
**R¹** ein Wasserstoffatom oder einen linearen oder verzweigten Kohlenwasserstoffrest mit 1-10 Kohlenstoffatomen,
**R²** einen zweiwertigen linearen, zyklischen oder verzweigten Kohlenwasserstoffrest mit 1-40 Kohlenstoffatomen, der ein oder mehrere Heteroatome, ausgewählt aus den Elementen Stickstoff, Sauerstoff, Schwefel oder Phosphor enthalten kann,
**R³ und R⁴** lineare, zyklische oder verzweigte Kohlenwasserstoffreste mit 1-10 Kohlenstoffatomen,
**w** die Werte 0 oder 1,
**x** die Werte 0 oder 1,
**y** die Werte 0 oder 1 und
**z** die Werte 0, 1 oder 2 bedeuten,
mit der Maßgabe, daß **w** und **x** nicht beide gleichzeitig 1 sein dürfen,
und Organosiliciumverbindungen, die ausgewählt werden aus
(B) Siloxan, das aufgebaut ist aus
0,0 bis 80,0 Mol-% Einheiten der allgemeinen Formel (2)
[R⁵₃SiO_{1/2}] (2),
0 bis 5,0 Mol-% Einheiten der allgemeinen Formel (3)
[R⁵₂SiO_{2/2}] (3),
0 bis 99,5 Mol-% Einheiten der allgemeinen Formel (4)
[R⁵SiO_{3/2}] (4)
und
0 bis 90,0 Mol-% Einheiten der allgemeinen Formel (5)
[SiO_{4/2}] (5),
wobei
**R⁵** Wasserstoffatom, Hydroxylgruppe, SiC-gebundener, gegebenenfalls substituierter C₁- bis C₁₈- Kohlenwasserstoffrest, welcher durch zweibindige, beidseitig an Kohlenstoffatome gebundene Reste -O-, -COO-, -OOC-, -CONR⁶-, -NR⁶CO- und -CO- unterbrochen sein kann oder C₁- bis C₁₈-Kohlenwasserstoffoxirest,
**R⁶** Wasserstoffatom oder C₁- bis C₁₈-Kohlenwasserstoffrest, mit der Maßgabe, daß die Organopolysiloxane (B) mindestens 2 Einheiten der allgemeinen Formeln (2) bis (5) aufweisen und die Summe der Einheiten der allgemeinen Formeln (2) bis (5) 100 Mol-% ergibt,
(C) Organosiliciumverbindung, die aufgebaut ist aus
0,0 bis 100,0 Mol-% Einheiten der allgemeinen Formel (6)
[R⁷₃SiO_{1/2}] (6),
0,0 bis 98,0 Mol-% Einheiten der allgemeinen Formel (7)
[R⁷₂SiO_{2/2}] (7),
0,0 bis 98,0 Mol-% Einheiten der allgemeinen Formel (8)
[R⁷SiO_{3/2}] (8)
und
0,0 bis 98,0 Mol-% Einheiten der allgemeinen Formel (9)
[SiO_{4/2}] (9),
wobei
**R⁷** Hydroxylgruppe, zweiwertiger SiC-gebundener, gegebenenfalls substituierter C₁- bis C₁₈-Kohlenwasserstoffrest, welcher durch zweibindige, beidseitig an Kohlenstoffatome gebundene Reste aus der Gruppe -O-, -COO-, -OOC-, -CONR⁶-, -NR⁶CO-und -CO- unterbrochen sein kann oder C₁- bis C₁₈- Kohlenwasserstoffoxirest,
mit der Maßgabe, daß in den Organosiliciumverbindungen (C) mindestens 90 Mol-% der Reste **R⁷** C₁- bis C₁₈- Kohlenwasserstoffoxireste sind und die die Summe der Einheiten der allgemeinen Formeln (1) bis (4) 100 Mol-% ergibt,
und
(D) Organosilan der allgemeinen Formel (10)
Si(R⁸)₄ (10),
wobei
**R⁸** C₁- bis C₁₈-Kohlenwasserstoffoxireste bedeutet,
**dadurch gekennzeichnet, dass** die Kunststeinprodukte mindestens 90 Gew-% anorganisches Pulver mit einer Korngrößenverteilung
10 - 40 Gew.-% Partikel einer Größe < 0,1 mm,
10 - 40 Gew.-% Partikel einer Größe von 0,1-0,6 mm,
1 - 80 Gew.-% Partikel einer Größe von 0,61-1,2 mm und
10 - 50 Gew.-% Partikel einer Größe von 1,21-15 mm
enthalten.

2. Verfahren nach Anspruch 1, bei dem die Reste **R¹, R³, R⁴, R⁵, R⁶** und **R⁷** ausgewählt werden aus Methyl-, Ethyl-, Propyl- und Phenylrest.

3. Verfahren nach Anspruch 1 und 2, bei dem die Kohlenwasserstoffoxireste **R⁷** und **R⁸** sind Methoxi- oder Ethoxireste sind.

4. Verfahren nach Anspruch 1 bis 3, bei dem das Verhältnis der Komponenten (A), (B), (C) und (D) so gewählt wird, dass die Mischung 40 - 70 Gew-% der Komponente (A), 0-60 Gew-% (B), 0-60 Gew-% (C) und 0-60 Gew-% (D), enthalten sind, wobei die Summe der Komponenten (B), (C) und (D) mindestens 30 Gew-% und die Summe der Komponenten (A), (B), (C) und (D) 100 Gew-% beträgt.

5. Verfahren nach Anspruch 1 bis 4, bei dem eine Mischung der Komponenten (A), (B), (C) und (D) zunächst mit dem organischen Polymer homogen vermischt wird und die erhaltene Mischung in einem nachfolgenden Schritt mit dem anorganischen Material vermischt wird.

6. Verfahren nach Anspruch 1 bis 5, bei dem als organisches Polymer ungesättigte Polyesterharze oder Acrylatharze eingesetzt werden.

## Claims

1. Process for producing a composite, namely artificial stone products,
in which the inorganic powder is mixed with organic polymer and simultaneously or subsequently mixed with
(A) silane adhesion promoter of the general formula (1)
H₂C=C(R¹)[C(O)O]_{w}(O)ₓ- (R²)_{y}-Si(R³)_{z}-(OR⁴)_{3-z} (1),
in which
**R¹** is a hydrogen atom or a linear or branched hydrocarbon radical having 1-10 carbon atoms,
**R²** is a divalent linear, cyclic or branched hydrocarbon radical having 1-40 carbon atoms which may contain one or more heteroatoms selected from the elements nitrogen, oxygen, sulfur or phosphorus,
**R³ and R⁴** are linear, cyclic or branched hydrocarbon radicals having 1-10 carbon atoms,
**w** has the values 0 or 1,
**x** has the values 0 or 1,
**y** has the values 0 or 1 and
**z** has the values 0, 1 or 2,
with the proviso that **w** and **x** must not both simultaneously be 1,
and organosilicon compounds which are selected from
(B) siloxane which is composed of
from 0.0 to 80.0 mol% of units of the general formula (2)
[R⁵₃ SiO_{1/2}] (2),
from 0 to 5.0 mol% of units of the general formula (3)
[R⁵₂SiO_{2/2}] (3),
from 0 to 99.5 mol% of units of the general formula (4)
[R⁵SiO_{3/2}] (4)
and
from 0 to 90.0 mol% of units of the general formula (5)
[SiO_{4/2}] (5),
in which
**R⁵** is a hydrogen atom, hydroxyl group, SiC-bonded, optionally substituted C₁- to C₁₈-hydrocarbon radical, which may be interrupted by divalent radicals -O-, -COO-, -OOC-, -CONR⁶-, -NR⁶CO - and -CO- bonded on both sides to carbon atoms, or a C₁- to C₁₈-hydrocarbon-oxy radical,
**R⁶** is a hydrogen atom or C₁- to C₁₈-hydrocarbon radical, with the proviso that the organopolysiloxanes (B) have at least 2 units of the general formulae (2) to (5) and the sum of the units of the general formulae (2) to (5) is 100 mol%,
(C) organosilicon compound which is composed of from 0.0 to 100.0 mol% of units of the general formula (6)
[R⁷₃SiO_{1/2}] (6),
from 0.0 to 98.0 mol% of units of the general formula (7)
[R⁷₂SiO_{2/2}] (7),
from 0.0 to 98.0 mol% of units of the general formula (8)
[R⁷SiO_{3/2}] (8)
and
from 0.0 to 98.0 mol% of units of the general formula (9)
[SiO_{4/2}] (9),
in which
**R⁷** is a hydroxyl group, divalent SiC-bonded, optionally substituted C₁- to C₁₈-hydrocarbon radical, which may be interrupted by divalent radicals from the group consisting of -O-, -COO-, -OOC-, -CONR⁶-, -NR⁶CO- and -CO- bonded on both sides to carbon atoms, or a C₁- to C₁₈-hydrocarbon- oxy radical,
with the proviso that, in the organosilicon compounds (C), at least 90 mol% of the radicals **R⁷** are C₁- to C₁₈-hydrocarbon-oxy radicals and the sum of the units of the general formulae (1) to (4) is 100 mol%,
and
(D) organosilane of the general formula (10)
Si(R⁸)₄ (10),
in which
**R⁸** are C₁- to C₁₈-hydrocarbon-oxy radicals, **characterized in that** the artificial stone products contain at least 90% by weight of inorganic powders having a particle size distribution of
10-40% by weight of particles having a size of < 0.1 mm,
10-40% by weight of particles having a size of 0.1-0.6 mm,
1-80% by weight of particles having a size of 0.61-1.2 mm and
10-50% by weight of particles having a size of 1.21-15 mm.

2. Process according to Claim 1, in which the radicals **R¹, R³, R⁴, R⁵, R⁶** and **R⁷** are selected from methyl, ethyl, propyl and phenyl radicals.

3. Process according to Claims 1 and 2, in which the hydrocarbon-oxy radicals **R⁷** and **R⁸** are methoxy or ethoxy radicals.

4. Process according to Claims 1 to 3, in which the ratio of the components (A), (B), (C) and (D) is chosen so that the mixture contains 40-70% by weight of the component (A), 0-60% by weight of (B), 0-60% by weight of (C) and 0-60% by weight of (D), the sum of the components (B), (C) and (D) being at least 30% by weight and the sum of the components (A), (B), (C) and (D) being 100% by weight.

5. Process according to Claims 1 to 4, in which a mixture of the components (A), (B), (C) and (D) is first homogeneously mixed with the organic polymer and the mixture obtained is mixed in a subsequent step with the inorganic material.

6. Process according to Claims 1 to 5, in which unsaturated polyester resins or acrylate resins are used as the organic polymer.

## Revendications

1. Procédé pour la production d'un matériau composite, à savoir de produits en pierre artificielle, dans lequel on mélange la poudre inorganique avec un polymère organique et simultanément ou ensuite on la mélange avec
(A) un promoteur d'adhérence de type silane de formule générale (1)
H₂C=C (R¹) [C(O)O]_{w}(O)ₓ-(R²)_{y}-Si(R³)_{z}-(OR⁴)_{3-z} (1),
où
**R¹** représente un atome d'hydrogène ou un radical hydrocarboné linéaire ou ramifié ayant 1-10 atomes de carbone,
**R²** représente un radical hydrocarboné divalent linéaire, cyclique ou ramifié ayant 1-40 atomes de carbone, qui peut contenir un ou plusieurs hétéroatomes, choisis parmi les éléments azote, oxygène, soufre ou phosphore,
**R³ et R⁴** représentent des radicaux hydrocarbonés linéaires, cycliques ou ramifiés ayant 1-10 atomes de carbone,
**w** représente les valeurs 0 ou 1,
**x** représente les valeurs 0 ou 1,
**y** représente les valeurs 0 ou 1 et
**z** représente les valeurs 0, 1 ou 2,
étant entendu que w et x ne doivent pas être l'un et l'autre simultanément 1,
et des composés organosiliciés qui sont choisis parmi
(B) un siloxane qui est constitué de
0,0 à 80,0 % en moles de motifs de formule générale (2)
[R⁵₃SiO_{1/2}] (2),
0 à 5,0 % en moles de motifs de formule générale (3)
[R⁵ ₂SiO_{2/2}] (3),
0 à 99,5 % en moles de motifs de formule générale (4)
[R⁵SiO_{3/2}] (4)
et
0 à 90,0 % en moles de motifs de formule générale (5)
[SiO_{4/2}] (5),
où
**R⁵** représente un atome d'hydrogène, un groupe hydroxy, un radical hydrocarboné en C₁-C₁₈ éventuellement substitué, lié par une liaison SiC, qui peut être interrompu par des radicaux à deux liaisons -O-, -COO-, -OOC-, -CONR⁶-, -NR⁶CO- et -CO-, liés des deux côtés à des atomes de carbone, ou un radical hydrocarbyl(C₁-C₁₈)oxy,
**R⁶** représente un atome d'hydrogène ou un radical hydrocarboné en C₁-C₁₈, étant entendu que les organopolysiloxanes (B) comportent au moins 2 motifs de formules générales (2) à (5) et la somme des motifs de formules générales (2) à (5) est égale à 100 % en moles,
(C) un composé organosilicié qui est constitué de
0,0 à 100,0 % en moles de motifs de formule générale (6)
[R⁷₃SiO_{1/2}] (6),
0,0 à 98,0 % en moles de motifs de formule générale (7)
[R⁷₂SiO_{2/2}] (7),
0,0 à 98,0 % en moles de motifs de formule générale (8)
[R⁷SiO_{3/2}] (8)
et
0,0 à 98,0 % en moles de motifs de formule générale (9)
[SiO_{4/2}] (9),
où
**R⁷** représente un groupe hydroxy, un radical hydrocarboné divalent en C₁-C₁₈ éventuellement substitué, lié par une liaison SiC, qui peut être interrompu par des radicaux à deux liaisons, liés des deux côtés à des atomes de carbone, choisis dans l'ensemble constitué par -O-, -COO-, -OOC-, -CONR⁶-, -NR⁶CO- et -CO- ou représente un radical hydrocarbyl(C₁-C₁₈)oxy,
étant entendu que dans les composés organosiliciés (C) au moins 90 % en moles des radicaux R⁷ sont des radicaux hydrocarbyl(C₁-C₁₈)oxy et que la somme des motifs de formules générales (1) à (4) est égale à 100 % en moles,
et
(D) un organosilane de formule générale (10)
Si(R⁸)₄ (10),
où
**R⁸** représente des radicaux hydrocarbyl(C₁-C₁₈)Oxy,
**caractérisé en ce que** les produits en pierre artificielle contiennent au moins 90 % en poids de poudre inorganique ayant une distribution granulométrique de
10 - 40 % en poids de particules d'une taille < 0,1 mm,
10 - 40 % en poids de particules d'une taille de 0,1-0,6 mm,
1 - 80 % en poids de particules d'une taille de 0,61-1,2 mm et
10 - 50 % en poids de particules d'une taille de 1,21-15 mm.

2. Procédé selon la revendication 1, dans lequel les radicaux **R¹, R³, R⁴, R⁵, R⁶** et **R⁷** sont choisis parmi les radicaux méthyle, éthyle, propyle et phényle.

3. Procédé selon la revendication 1 ou 2, dans lequel les radicaux hydrocarbyloxy **R⁷** et **R⁸** sont des radicaux méthoxy ou éthoxy.

4. Procédé selon les revendications 1 à 3, dans lequel le rapport des composants (A), (B), (C) et (D) est choisi de manière à ce que le mélange contienne 40 - 70 % en poids du composant (A), 0-60 % en poids de (B), 0-60 % en poids de (C) et 0-60 % en poids de (D), la somme des composants (B), (C) et (D) étant d'au moins 30% en poids et la somme des composants (A), (B), (C) et (D) étant égale à 100% en poids.

5. Procédé selon les revendications 1 à 4, dans lequel on mélange d'abord de façon homogène un mélange des composants (A), (B), (C) et (D) avec le polymère organique, et dans une étape subséquente on mélange le mélange obtenu avec la matière inorganique.

6. Procédé selon les revendications 1 à 5, dans lequel on utilise comme polymère organique des résines acrylate ou des résines polyester insaturées.
